# EUROPEAN PATENT APPLICATION

(11) **EP 3 732 989 A1**
(43) Date of publication of application: **04.11.2020**
(21) Application number: 18896926.5
(22) Date of filing: 12.10.2018
(51) Int. Cl.: A23F 3/16

(54) **CHITOSAN-CONTAINING NON-FERMENTED TEA BEVERAGE OR SEMI-FERMENTED TEA BEVERAGE**

(30) Priority: 27.12.2017 JP 2017252490
(71) Applicant: Suntory Holdings Limited, Osaka 530-8203 (JP)
(72) Inventor: YOSHIDA, Atsushi, Kawasaki-shi, Kanagawa 211-0067 (JP); OSADA, Tomoya, Tokyo 104-0031 (JP)
(74) Representative: Vossius & Partner Patentanwälte Rechtsanwälte mbB
(86) International application number: PCT/JP2018/038021
(87) International publication number: WO 2019/130724

(57) **Abstract**

An object of the present invention is to provide a tea beverage which comprises a chitosan but is prevented from getting cloudy.

According to this invention, there is provided a non-fermented or semi-fermented tea beverage comprising a chitosan having a molecular weight of not more than 7 kDa at a concentration of not more than 200 ppm.

## Description

### TECHNICAL FIELD

The present invention relates to a chitosan-containing non-fermented tea beverage or semi-fermented tea beverage. More particularly, the tea beverage of this invention relates to a beverage composition which comprises a chitosan having a particular molecular weight but is prevented from getting cloudy.

### BACKGROUND ART

In recent years, diverse functions of chitosan have been revealed. There are known functions of chitosan, such as promotion of calcium absorption (NPL 1) and anti-obesity activity (NPL 2).

There have been various propositions regarding the addition of chitosan to beverages or foods. For example, PTL 1 proposes that a chitosan is added to a weakly-acidic beverage with a pH of not less than 4.6 to therby prevent the pH of the beverage from decreasing. Also, PTL 2 discloses that beverages having reduced astringency derived from a chitosan can be obtained by combining a chitosan with a chondroitin sulfate. Further, PTL 3 discloses that chitosan-containing beverages that are stable in a neutral to alkaline pH region can be obtained by using a chitosan having a particular molecular weight distribution.

### CITATION LIST

### PATENT LITERATURES

PTL 1: Japanese Unexamined Patent Application Publication No. JP 2001-000158
PTL 2: Japanese Unexamined Patent Application Publication No. JP 2009-055882
PTL 3: Japanese Unexamined Patent Application Publication No. JP 2005-075957

### NON PATENT LITERATURES

NPL 1: Chitin and Chitosan Research Vol.4, No.2, 1998, p.170-171
NPL 2: Chitin and Chitosan Research Vol.4, No.2, 1998, p.166-167

### SUMMARY OF INVENTION

### TECHNICAL PROBLEM

The present inventors have conducted various studies on chitosan-containing tea beverages, and found that since those beverages are particularly liable to get cloudy, there is a need not only to disperse a chitosan uniformly but also to prevent the generation of cloudiness over time. In the case of beverages typified by packaged beverages, it may take time until beverages are consumed after production; thus, if the generation of cloudiness over time is not prevented, not only the chitosan intake upon drinking of beverages becomes nonuniform, but also the appearance of beverages becomes unpleasant.

An object of the present invention is to prevent the generation of cloudiness in a chitosan-containing tea beverage.

### SOLUTION TO PROBLEM

The present inventors have made intensive studies to achieve the aforementioned object, and as a result found that when a chitosan, an ingredient derived from a natural source, is added to a non-fermented tea beverage made from unfermented tea leaves or a semi-fermented tea beverage made from not fully fermented tea leaves, the beverage is less liable to get cloudy. As a result of further studies on the molecular weight and amount of a chitosan to be added to a non-fermented or semi-fermented tea, the inventors found that addition of a chitosan with a particular molecular weight in an amount not more than the particular value is important to prevent the generation of cloudiness in a tea beverage. On the basis of these findings, the inventors completed the present invention.

The present invention includes, but is not limited to, the following embodiments.
(1) A non-fermented or semi-fermented tea beverage comprising a chitosan having a molecular weight of not more than 7 kDa at a concentration of not more than 200 ppm.
(2) The beverage as set forth in (1), wherein the chitosan is present at a concentration of 1 to 80 ppm.
(3) The beverage as set forth in (1) or (2), wherein the chitosan has a molecular weight of not more than 5 kDa.
(4) The beverage as set forth in any of (1) to (3), wherein the beverage is a green tea beverage or an oolong tea beverage.
(5) The beverage as set forth in any of (1) to (4), wherein the beverage has a pH of 3.5 to 7.5.
(6) The beverage as set forth in any of (1) to (5), wherein the beverage is a packaged beverage.
(7) A method for producing a non-fermented or semi-fermented tea beverage, the method comprising adding a chitosan having a molecular weight of not more than 7 kDa at a concentration of not more than 200 ppm to the beverage.
(8) A method for preventing the generation of cloudiness in a non-fermented or semi-fermented tea beverage, the method comprising adding a chitosan having a molecular weight of not more than 7 kDa at a concentration of not more than 200 ppm to the beverage.

### ADVANTAGEOUS EFFECTS OF INVENTION

According to the present invention, the generation of cloudiness in a chitosan-containing tea beverage can be effectively prevented.

### BRIEF DESCRIPTION OF DRAWING

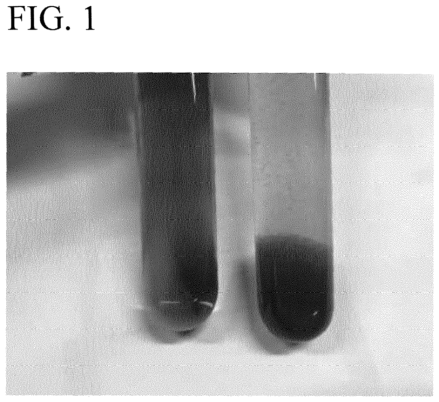

[FIG. 1] FIG. 1 shows a photograph showing the appearances of two beverage samples (oolong teas) prepared in Experiment 1, one that did not appear cloudy (-, left) and the other that got apparently cloudy (++, right).

### DESCRIPTION OF EMBODIMENTS

The present invention relates to a tea beverage comprising a chitosan having a particular molecular weight in a particular amount.

### Chitosan

The tea beverage of the present invention comprises a chitosan having a particular molecular weight. Chitosan is a straight-chain polysaccharide, and is a 1,4-polymer of glucosamine. The molecular formula of chitosan is (C₆H₁₁NO₄)ₙ, and depending on its degree of polymerization, the molecular weight of chitosan may be even as high as several hundreds of thousands. In the present specification, any 1,4-polymer of glucosamine is referred to as a "chitosan" regardless of its molecular weight and degree of polymerization.

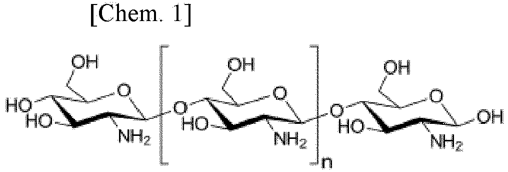

The molecular weight of a chitosan added to the tea beverage of the present invention is not more than 7 kDa. In a preferred embodiment, the molecular weigth of a chitosan can be not more than 5 kDa, or may be not more than 3 kDa or not more than 2 kDa. As long as it has such a molecular weight, the chitosan can be used in the form of free amine or a salt with a suitable acid. Further, in a preferred embodiment, n in the formula shown above is in the range of 0 to 50, preferably 1 to 40, more preferably 2 to 30. The form of a salt is not particularly limited as long as the salt can be used for edible purposes. Examples of a salt with an organic acid include, but are not limited to, acetates, lactates, and citrates. Examples of a salt with an inorganic acid include, but are not limited to, hydrochlorides and sulfates. Preferred salts are hydrochlorides.

In general, chitosan is less soluble in water, although this depends on its degree of polymerization. In particular, chitosan is less soluble in solutions with neutral to alkaline pH. Therefore, when a chitosan is added to a packaged beverage or the like, there are technical bottlenecks not only in uniformly dispersing the chitosan in the solution but also in preventing the generation of cloudiness, precipitation, or the like over time. Cloudiness or precipitation may be liable to occur when components of a beverage are associated with a chitosan; thus, in order to produce a chitosan-containing beverage excellent in stability, technical development is needed depending on the type of a beverage to which to add a chitosan. In the present invention, tea beverages excellent in stability can be obtained by adding a chitosan having a particular molecular weight in a particular amount.

Chitosan can be mainly obtained by deacetylating chitin, obtained from the exoskeleton of crustaceans inducing crab and lobster. In some cases, convertion (deacetylation) of chitin to chitosan does not take place completely, so that some quantity of N-acetylglucosamine is present on the sugar chain. Thus, many commercial chitosan products include a notation of degree of acetylation (%DA). Many commercial chitosan products have a %DA of 60 to 100%.

In the present invention, the amount of a chitosan added to a tea beverage is not more than 200 ppm. Chitosan is substantially harmless as a food additive and has nearly no taste or scent, but when a chitosan is added to a non-fermented or semi-fermented tea in an amount exceeding 200 ppm, the tea becomes markedly cloudy due to the excess presence of the chitosan, etc. In a preferred embodiment, the concentration of a chitosan in the tea beverage of this invention is in the range of 1 to 80 ppm, preferably 5 to 60 ppm.

In the present invention, a chitosan can be added at a suitable step during the process of production of beverages. Exemplary addition procedures include, but are not limited to, preliminary addition of a chitosan to a source ingredient, addition of a chitosan during the step of mixing source ingredients, and addition of a chitosan after dissolution of mixed ingredients in water. In the cases where a tea beverage is subjected to sterilization treatment, the addition of a chitosan can be carried out before or after the sterilization treatment of the beverage.

### Tea beverage

The present invention is directed to a tea beverage, and *inter alia* to a non-fermented or semi-fermented tea beverage. The tea beverage of this invention can be obtained by incorporating a liquid extract of tea. The liquid extract of tea is obtained by extracting tea leaves as a source ingredient with warm water and removing extraction residues from a resulting liquid extract. The tea beverage of this invention incorporates a liquid extract of tea obtained from leaves of a tree of tea (scientific name: *Camellia sinensis*), a plant of the family *Theaceae,* or from a processed product of those leaves. The tea used is a semi-fermented and/or non-fermented tea. With regard to tea leaves used as a source ingredient, there are no particular limitations on the variety, production area, picking time or method, cultivation method, etc. of tea leaves, as long as they are semi-fermented or non-fermented. For example, fresh tea leaves composed of a mixture of tea leaves and stems can also be used as a source ingredient. Preferably, the non-fermented tea is exemplified by green teas such as *Sencha, Gyokuro* and *Tencha,* and the semi-fermented tea is exemplified by oolong teas (blue teas) such as *Tekkanon* and *Ogonkei.*

Extraction can be carried out by, for example, following a known method using an extraction apparatus such as kneader. To be specific, tea leaves as a source ingredient can be extracted with 20 to 100 times the amount of extraction water at 60 to 100°C (preferably 70 to 90°C) for about 1 to 20 minutes, optionally with stirring once or several times, under ambient or increased pressure. As referred to above, the extraction water used for extraction can be exemplified by pure water (including hard water, soft water, ion-exchange water), an ascorbic acid-containing aqueous solution, pH-adjusting water, and the like. Further, during or after extraction, an antioxidant such as L-ascorbic acid, and/or a pH adjustor such as sodium hydrogen carbonate may be added to a liquid extract of tea.

The liquid extract of tea obtained by extracting tea leaves as a source ingredient may be then filtered or otherwise treated to remove extraction residues, and optionally centrifuged or otherwise treated to remove fine powder. The conditions for centrifugation (*e.g.,* flow rate, number of revolutions) can be selected as appropriate in consideration of various factors including the clarity of a finished tea beverage. During centrifugation, it is advisable to cool the liquid extract to about 5 to 40°C. Centrifuging under cooled conditions results in an increase in the clarity of a finished tea beverage.

In a preferred embodiment, the tea beverage of the present invention has a pH (hydrogen ion concentration index) of 3.5 to 7.5. In general, it is considered preferable that tea beverages should have a weakly-acidic to neutral region of pH since they may alter in color at low pH, but from the viewpoint of control of microorganisms, it is considered preferable to adjust pH to an acidic region. According to this invention, a beverage with excellent characteristics can be obtained even at a pH relatively close to neutral, since the beverage incorporates a chitosan, which is expected to exhibit antimicrobial and other biological activities. In a more preferred embodiment, the tea beverage of this invention has a pH of 4.6 to 7.0, or may have a pH of 5.2 to 6.5. The pH of the beverage can be adjusted by following a known method -- for example, by adding a pH adjustor such as ascorbic acid, citric acid, potassium carbonate, baking soda (sodium hydrogen carbonate), sodium hydroxide, or disodium hydrogen phosphate.

The beverage of the present invention can be advantageously used, for example, as a food for obtaining the functionality derived from a chitosan or a liquid extract of tea. To be specific, the beverage of this invention can be made into a food for specified health uses, a food with nutrient function claims, a food for elderly, a food for special dietary uses, a functional food, or a health supplement.

As a way of preparing the beverage, for example, after source ingredients used to prepare a known food composition are mixed with a specified amount of the chitosan of the present invention, the beverage may be prepared using the source ingredients by following a known production method for such a food composition. Alternatively, the beverage may be prepared by adding a specified amount of the chitosan of this invention to a known, ready-made food composition. There is no particular limitation on the timing or method of adding the chitosan of this invention.

The beverage of the present invention can be orally ingested by an appropriate method depending on its form. As referred to herein, the term "ingested (ingestion)" is used to cover all modes of ingestion, administration or drinking. The intake of the beverage of this invention can be determined as appropriate depending on its form, ingestion method, intended use, the age, body weight and medical condition of an individual who ingests it.

In addition to the chitosan mentioned above, a sweetener, an acidulant, a fruit juice, and/or any other additives may be added to the beverage of the present invention to the extent that such additives do not interfere with the effects of this invention. Examples of additives include, but are not limited to, flavorant, vitamin, pigment, antioxidant, emulsifier, preservative, seasoning, essence, pH adjustor, and quality stabilizer.

The beverage of the present invention can be provided as a carbonated beverage containing carbon dioxide gas, but is preferably provided as a non-carbonated beverage. Also, the beverage of this invention can be provided as an alcoholic beverage, but is preferably provided as a non-alcoholic beverage. As referred to herein, the term "non-alcoholic beverage" refers to a bevearage having an alcoholic content of less than 1%.

The concentration of soluble solids in the beverage of the present invention can be evaluated by means of Brix values determined using a sugar content meter, refractometer, or the like. The Brix is a value obtained by converting a refractive index measured at 20°C into a mass/mass percentage of sucrose in solution based on the conversion table published by ICUMSA (the International Commission for Uniform Methods of Sugar Analysis), and represents the concentration of soluble solids in solution. The Brix is expressed in unit of "°Bx", "%" or "degree". In a preferred embodiment, the Brix value of the beverage of this invention is in the range of 0 to 20%, preferably not more than 10%, and may be not more than 3% or not more than 2%.

The tea beverage of the present invention is less liable to get cloudy over time, and thus is advantageously applied as a beverage that is relatively faint in color. The color of the beverage can be evaluated using a light transmittance colorimeter, or the like. The transparency of the beverage can be quantified by, for example, using a known technique for measuring liquid turbidity. Also, the characteristics of the beverage can be quantified using a colorimeter, or the like. In a preferred embodiment, the turbidity of the beverage of this invention is not more than 300, and may be not more than 100 or not more than 50. With a colorimeter, the beverage can be characterized by a ΔE value of transmitted light as measured relative to pure water, a Lab value, or the like. In a preferred embodiment, the ΔE value of the beverage of this invention as measured relative to pure water is not more than 100, and may be not more than 50, not more than 40 or not more than 30.

In a preferred embodiment, the beverage of the present invention is a beverage that is less liable to generate precipitation even during storage for long periods of time at ambient temperature. In other words, the beverage of this invention is characterized in that the generation of precipitation over time is prevented so that the appearance of the beverage can be maintained uniformly over long periods of time, and therefore, the beverage of this invention can be advantageously provided as a packaged beverage. As referred to herein, the term "packaged beverage" refers to a beverage that is packed in a plastic package like PET bottle, or any other package such as can, glass bottle, or paper package. Since the beverage of this invention is characterized in that the generation of precipiration over time can be prevented, it is preferred in one embodiment that the beverage be provided as a packaged beverage that is packed in a transparent package.

For the purpose of long-term storage at ambient temperature, the packaged beverage of the present invention is produced by, for example, heat sterilizing a prepared liquid obtained at a preparation step and then packing it in a package. For heat sterilization, treatment needs to be done as stipulated in the Food Sanitation Act of Japan -- for example, UHT sterilization (which involves, for example, retaining a prepared liquid at 100 to 150°C for one second to several tens of seconds) can be performed in, for example, a plastic package like PET bottle.

In one embodiment, the present invention can also be understood to be directed to a method for producing a beverage. Since, as described above, the beverage of this invention comprises a chitosan having a particular molecular weight, the content of the chitosan is adjusted to be in a particular range. For example, the method for producing the beverage of this invention can involve a step of mixing specified components to prepare a beverage, a step of adjusting the pH of the prepared beverage, a step of packing the beverage in a package, and other steps.

The packaged beverage of the present invention can be produced using a conventionally known method. Any skilled artisan can design, as appropriate, the conditions for a component mixing step, an optional sterialization step, and a packaging step.

In another embodiment, the present invention can also be understood to be directed to a method for preventing cloudiness in a tea beverage. Since, as described above, the beverage of this invention comprises a chitosan having a particular molecular weight, the content of the chitosan is adjusted to be in a particular range. To be specific, this invention is directed to a method for preventing the generation of cloudiness in a non-fermented or semi-fermented tea beverage, the method comprising adding a chitosan having a molecular weight of not more than 7 kDa at a concentration of not more than 200 ppm to the beverage.

### EXAMPLES

Hereunder, the present invention will be described in more detail by way of specific experimental examples, but this invention is not limited to the specific examples given below. Unless otherwise stated herein, all concentrations and other like parameters are expressed on a mass basis, and all numerical ranges are inclusive of their endpoints.

### Experiment 1: Production and evaluation of chitosan-containing beverages

Different types of tea beverages having a chitosan added thereto were used to evaluate the liability to aggregation of the chitosan in the tea beverages.

### (Preparation of packaged beverages)

A chitosan oligosaccharide (degree of polymerization: 2 to 8; average molecular weight: not more than 1.6 kDa) was diluted with sterile water to prepare 1 wt.% of a chitosan solution. Separately, three different commercial tea beverages (non-fermented tea, semi-fermented tea, fermented tea) were filtered to remove insoluble solids, thereby preparing tea beverages serving as base materials.
- Non-fermented tea (green tea): *Iyemon* (Suntory Beverage & Food Limited)
- Semi-fermented tea (oolong tea): *Suntory Oolong Tea* (Suntory Beverage & Food Limited)
- Fermented tea (black tea): *Gogo-no-Kocha Oishii Sugar-Free* (Kirin Beverage Company, Limited)

Then, the chitosan solution was added to each of the different tea beverages as base materials to prepare packaged tea beverages incorporating a chitosan at the different concentrations shown in the table given below. In this process, the tea beverages were adjusted to pH 6.0 with addition of an aqueous sodium hydroxide solution.

### (Evaluation of cloudiness)

The packaged beverages, after stirred in a vortex mixer and left to stand at room temperature for one hour, were evaluated for appearance on a three-grade scale by visual inspection. The evaluation criteria are as follows:
"-": Did not appear cloudy (not differently from a control beverage containing no chitosan)
"+": Appeared slightly cloudy
" ++": Appeared apparently cloudy

### [Table 1]

**Table 1. Experiment 1**

| Chitosan concentration (ppm) | 0 (control) | 50 | 75 | 100 | 400 |
|---|---|---|---|---|---|
| Non-fermented tea (green tea) | - | - | - | + | ++ |
| Semi-fermented tea (oolong tea) | - | - | - | + | ++ |
| Fermented tea (black tea) | - | ++ | ++ | ++ | ++ |

Table 1 shows the results of evaluating the generation of cloudiness in the prepared packaged tea beverages. The fermented tea (black tea) beverages containing all concentrations of chitosan got apparently cloudy. On the other hand, as for the non-fermented tea (green tea) and semi-fermented tea (oolong tea) beverages, those with a chitosan content of 400 ppm got apparently cloudy, but those containing a chitosan at concentrations of 50 ppm and 75 ppm did not appear cloudy, and even those containing 100 ppm of chitosan only appeared slightly cloudy.

### Experiment 2: Production and evaluation of chitosan-containing beverages (effects of chitosan's molecular weight)

The non-fermented tea (green tea) and semi-fermented tea (oolong tea) beverages which showed satisfactory results in Experiment 1 were used to closely examine the effects of chitosan's molecular weight. By the same procedure as in Experiment 1, the packaged tea beverages containing a chitosan at the different concentrations shown in the table given below were prepared and evaluated. In this experiment, the following materials were used as chitosan additives having different molecular weights (all produced by Koyo Chemical Co., Ltd.).
- Chitosan (degree of polymerization: 2 to 8, average molecular weight: not more than 1.6 kDa)
- Chitosan (degree of polymerization: about 100; average molecular weight: about 16 kDa)
- Chitosan (degree of polymerization: about 300; average molecular weight: about 49 kDa)

### [Table 2]

**Table 2-1. Experiment 2 (Non-fermented tea)**

| Chitosan concentration (ppm) | 0 (control) | 10 | 150 | 400 |
|---|---|---|---|---|
| Degree of polymerization ≤10 (average MW ≤1.6kDa) | - | - | + | ++ |
| Degree of polymerization ca.100 (average MW ca.16kDa) | - | ++ | ++ | ++ |
| Degree of polymerization ca.300 (average MW ca.49kDa) | - | ++ | ++ | ++ |

**Table 2-2. Experiment 2 (Semi-fermented tea)**

| Chitosan concentration (ppm) | 0 (control) | 10 | 150 | 400 |
|---|---|---|---|---|
| Degree of polymerization ≤10 (average MW ≤1.6kDa) | - | - | + | ++ |
| Degree of polymerization ca.100 (average MW ca.16kDa) | - | ++ | ++ | ++ |
| Degree of polymerization ca.300 (average MW ca.49kDa) | - | ++ | ++ | ++ |

As evident from the tables above, all of those non-fermented tea (green tea) and semi-fermented tea (oolong tea) beverages containing a chitosan having a molecular weight of 16 kDa or greater got apparently cloudy. On the other hand, as for the non-fermented and semi-fermented tea beverages prepared using a low molecular weight chitosan, those with a low range of chitosan contents were prevented from getting cloudy, but those with a chitosan content of 400 ppm appeared apparently cloudy.

## Claims

1. A non-fermented or semi-fermented tea beverage comprising a chitosan having a molecular weight of not more than 7 kDa at a concentration of not more than 200 ppm.

2. The beverage according to claim 1, wherein the chitosan is present at a concentration of 1 to 80 ppm.

3. The beverage according to claim 1 or 2, wherein the chitosan has a molecular weight of not more than 5 kDa.

4. The beverage according to any of claims 1 to 3, wherein the beverage is a green tea beverage or an oolong tea beverage.

5. The beverage according to any of claims 1 to 4, wherein the beverage has a pH of 3.5 to 7.5.

6. The beverage according to any of claims 1 to 5, wherein the beverage is a packaged beverage.

7. A method for producing a non-fermented or semi-fermented tea beverage, the method comprising adding a chitosan having a molecular weight of not more than 7 kDa at a concentration of not more than 200 ppm to the beverage.

8. A method for preventing the generation of cloudiness in a non-fermented or semi-fermented tea beverage, the method comprising adding a chitosan having a molecular weight of not more than 7 kDa at a concentration of not more than 200 ppm to the beverage.
